# EUROPÄISCHE PATENTANMELDUNG

(11) **EP 2 335 474 A1**
(43) Veröffentlichungstag der Anmeldung: **22.06.2011**
(21) Anmeldenummer: 10180218.9
(22) Anmeldetag: 27.09.2010
(51) Int. Cl.: A01G 13/02, A01G 9/02, A47H 27/00, A01G 9/20

(54) **Pflanzwanne**

(30) Priorität: 17.12.2009 AT 8052009 U
(71) Anmelder: Buttazoni Gesellschaft m.b.H., 9562 Himmelberg (AT)
(72) Erfinder: Buttazoni, Armin, 9562, Himmelberg (AT)
(74) Vertreter: Sticht, Andreas

(57) **Zusammenfassung**

Eine Pflanzwanne (1) für das Ziehen von Gewürzkräutern besitzt eine Wanne, die aus einem Körper (2) aus gebogenem Blech oder Kunststoff und zwei an den gebogenen Rändern (13) anliegenden Seitenwänden (3) gebildet ist. An den Seitenwänden (3) ist eine Abdeckung (4) verschiebbar geführt, welche in ihrer Gebrauchslage die Öffnung an der Oberseite der Wanne (1) überdeckt. Die Pflanzwanne (1) kann an einem Stativ (17) mit lotrechten Stehern (18) oder zwischen Stehern (18) einer Balkonbrüstung (20) montiert werden.

## Beschreibung

Die Erfindung betrifft eine Wanne und insbesondere eine Pflanzwanne.

Der Erfindung liegt die Aufgabe zugrunde eine Wanne (Pflanzwanne) zur Verfügung zu stellen, die bei einfachem Aufbau ihre Funktion als Wanne, insbesondere als Pflanzwanne, z.B. für Kräuter, beispielsweise als Balkonkräutergarten, erfüllt.

Gelöst wird diese Aufgabe erfindungsgemäß mit einer Pflanzwanne, welche die Merkmale von Anspruch 1 aufweist. Zudem wird ein Verfahren gemäß Anspruch 13 bereitgestellt.

Vorteilhafte und bevorzugte Ausgestaltungen der erfindungsgemäßen Pflanzwanne und des Verfahrens sind Gegenstand der Unteransprüche.

Durch die Führung der Abdeckung in den Seitenwänden der Wanne kann die Abdeckung ohne zusätzlichen Platzbedarf geöffnet und geschlossen werden, was insbesondere beim Einsatz in beengten Umgebungen, beispielsweise auf einem Balkon vorteilhaft ist. Zudem wird hierdurch beispielsweise beim Einsatz auf einem Balkon die Gefahr eines Herabfallens von Gegenständen und Teilen minimiert.

Bei einem Ausführungsbeispiel wird eine Wanne, insbesondere eine Pflanzwanne, bereitgestellt, umfassend einen Körper, zwei Seitenwände, und eine öffen- und schließbare Abdeckung, die in ihrer Wirkstellung eine Öffnung, die an der Oberseite des Körpers der Wanne vorgesehen ist, überdeckt.

Die Seitenwände der Wanne können über die Öffnung der Wanne überstehen. Die Seitenwände können gesonderte, mit dem Körper der Wanne verbundene Platten sein.

Die Abdeckung kann bei manchen Ausführungsbeispielen mit ihren seitlichen Rändern in Führungen in den Seitenwänden der Wanne geführt sein. Die Führungen können dabei Nuten in Innenseiten der Seitenwände der Wanne sein. Die Abdeckung kann von einer biegsamen Platte gebildet sein. Die Abdeckung kann von mehreren nach Art einer Jalousie miteinander gekuppelten Leisten gebildet sein. Die Abdeckung kann lichtdurchlässig sein. Der Abdeckung kann wahlweise ein beschränkt oder nicht lichtdurchlässiges Abschattungselement zugeordnet sein. Die Abdeckung kann in ihrer Versorgungslage außerhalb des Körpers der Wanne angeordnet sein. Die Abdeckung kann in ihrer Versorgungslage mit ihren seitlichen Rändern in Führungen, insbesondere in Nuten, aufgenommen sein, wobei die Führungen außerhalb des Körpers der Wanne verlaufend angeordnet sind. Die Abdeckung kann in ihrer Gebrauchslage zwischen den die Öffnung der Wanne begrenzenden Rändern des Körpers der Wanne und die Öffnung überdeckend angeordnet sein.

Der Körper der Wanne kann aus Blech, oder Kunststoff bestehen. Die Seitenwände können aus insbesondere lichtdurchlässigem Kunststoff oder ebenso aus Blech bestehen. Die seitlichen Ränder des Körpers der Wanne können in Haltenuten in den einander zugewendeten Seiten der Seitenwände eingreifen. Die Seitenwände können durch Spannelemente in Anlage an die seitlichen Ränder des Körpers der Wanne gehalten sein. Die Spannelemente können Stangen mit auf wenigstens ein Ende auf die Stangen geschraubten Muttern sein.

An der Abdeckung kann wenigstens ein Handgriff vorgesehen sein. Die Abdeckung kann im Bereich des wenigstens einen Handgriffes, insbesondere durch wenigstens eine Randleiste, verstärkt sein.

In der Wanne, insbesondere im Körper derselben, kann eine Heizung vorgesehen sein. Die Heizung kann dabei wenigstens ein elektrisches Widerstandsheizkabel umfassen. Die Heizung kann auf einem Rost, der im Körper der Wanne vorgesehen ist, aufliegen.

Der Rost kann ein Lochblech sein. Der Rost kann mit Abstand vom tiefsten Bereich des Körpers der Wanne angeordnet sein. Der Rost kann mit seinen Längsseitenrändern am Körper der Wanne mit Abstand von den freien Längsrändern des Körpers der Wanne anliegen.

Die Wanne kann an einem Stativ befestigt sein. Die Wanne kann über ihre Seitenwände an Stehern des Stativs befestigt ist.

Die Steher können Füße aufweisen. An wenigstens einem der Füße können Rollen nach unten abstehend vorgesehen sein.

Die Rollen können dabei an beiden Füßen vorgesehen sein. Die Rollen können an wenigstens einem der Füße als Lenkrollen ausgebildet sein.

Dadurch, dass die Pflanzwanne eine Wanne und eine öffen- und schließbare Abdeckung aufweist, kann die Pflanzwanne zum Ziehen von Pflanzen, insbesondere von Kräutern, wie Gewürzkräutern, verwendet werden.

Da die Pflanzwanne eine öffen- und schließbare Abdeckung aufweist, besteht die Möglichkeit, sie an beliebiger Stelle aufzustellen, zumal die Pflanzwanne eine in sich selbst tragende Konstruktion darstellen kann.

Insbesondere ist es für die erfindungsgemäße Pflanzwanne möglich, diese in eine Balkonbrüstung zu integrieren oder an einer Balkonbrüstung einzuhängen oder aber sie an einem Stativ zu befestigen, sodass sie an beliebiger Stelle, z.B. auf einem Balkon, in einer Wohnung, in einem Garten, aufgestellt werden kann. Es ist auch möglich, die Pflanzwanne beispielsweise mittels Konsolen oder anderer Befestigungselemente an einer Wand anzubringen, beispielsweise an einer Außenwand unter einem Fenster.

Dabei kann die erfindungsgemäße Pflanzwanne mit Hilfe ihrer Seitenwände an lotrechten Bauteilen, wie lotrechten Teilen (Steher aus Profilleisten) von Balkonbrüstungen, oder an Gestellen (Stativen) befestigt, insbesondere angeschraubt, werden.

Eine besonders einfache Konstruktion ergibt sich, wenn die Abdeckung zum Öffnen und Schließen mit ihren Seitenrändern in Führungen, beispielsweise in Nuten, an den Innenseiten der Seitenwände der Wanne geführt ist. So kann die Abdeckung, die in einer bevorzugten Ausführungsform aus flexiblem, insbesondere durchsichtigem Werkstoff (eine dünne, flexible Platte) besteht, in ihre Wirklage bewegt werden, in der sie die Öffnung, die sich in der Gebrauchslage an der Oberseite des Körpers der Wanne befindet, verschließt, geschoben oder gezogen werden.

Wenn Pflanzen zu behandeln und beispielsweise Kräuter (Gewürzkräuter) zu ernten sind, genügt es, die Abdeckung zu öffnen, sodass Zugang zu den Pflanzen gegeben ist, damit diese gesetzt, gepflegt, gegossen und/oder geerntet werden können.

Eine besonders einfache Konstruktion der erfindungsgemäßen Wanne ergibt sich, wenn der beispielsweise als gebogener Blech- oder Kunststoffteil ausgeführte Körper der Wanne mit seinen seitlichen (gekrümmten) Rändern in bogenförmige Haltenuten in den einander zugewendeten Seiten der Seitenwände eingreifend angeordnet ist. Hierbei ist es vorteilhaft, wenn die Seitenwände durch Spannelemente, insbesondere Spannstangen, mit Muttern aufeinander zu vorgespannt werden, sodass die Seitenwände in Anlage an die seitlichen Ränder des Körpers der Wanne gehalten sind.

Weitere Einzelheiten und Merkmale sowie die Vorteile der erfindungsgemäßen Pflanzwanne ergeben sich aus der nachstehenden Beschreibung eines bevorzugten Ausführungsbeispiels anhand der Zeichnungen. Es zeigt:
- Fig.1: eine erfindungsgemäße Pflanzwanne in Schrägansicht mit teilweise geöffneter Abdeckung und in einem Stativ gehalten,
- Fig. 2: die Pflanzwanne aus Fig. 1 in einer anderen Ansicht,
- Fig. 3: eine erfindungsgemäße Pflanzwanne geöffnet in eine Balkonbrüstung integriert,
- Fig. 4: eine Ansicht ähnlich wie Fig. 3, die Pflanzwanne geschlossen,
- Fig. 5: in Vorderansicht, die Pflanzwanne aus Fig. 4 und
- Fig. 6: die Pflanzwanne aus Fig. 3 in Vorderansicht.

In dem in den Figuren gezeigten Ausführungsbeispiel besteht die erfindungsgemäße Pflanzwanne 1 aus einem Körper 2, der durch einen gebogenen Blechteil oder Kunststoffteil gebildet ist, dessen freie Ränder 16 umgebördelt sind. An beiden Enden des insbesondere kreisförmig gebogenen Körpers 2 der Wanne 1 sind ovale Seitenwände 3 vorgesehen. Dabei ist die Anordnung so getroffen, dass die seitlichen Ränder 13 des Körpers 2 der Wanne 1 in Haltenuten 12 an den einander zugewendeten Seitenflächen der Seitenwände 3 eingreifen. Um die Seitenwände 3 mit dem Körper 2 der Wanne 1 zu verbinden und so die Wanne 1 in zusammengebauten Zustand zu halten, sind im gezeigten Ausführungsbeispiel Spannstangen 8 vorgesehen, über deren Enden Muttern 9 geschraubt sind, welche die Seitenwände 3 in Anlage an die seitlichen Ränder 13 des Körpers 2 der Wanne 1 halten. Zusätzlich kann wenigstens eine in der Längsmitte des Körpers 2 der Wanne 1 angeordnete Questrebe 21 vorgesehen sein, die ein Ausbeulen des Körpers 2 unter dem Druck eingefüllter Erde verhindert.

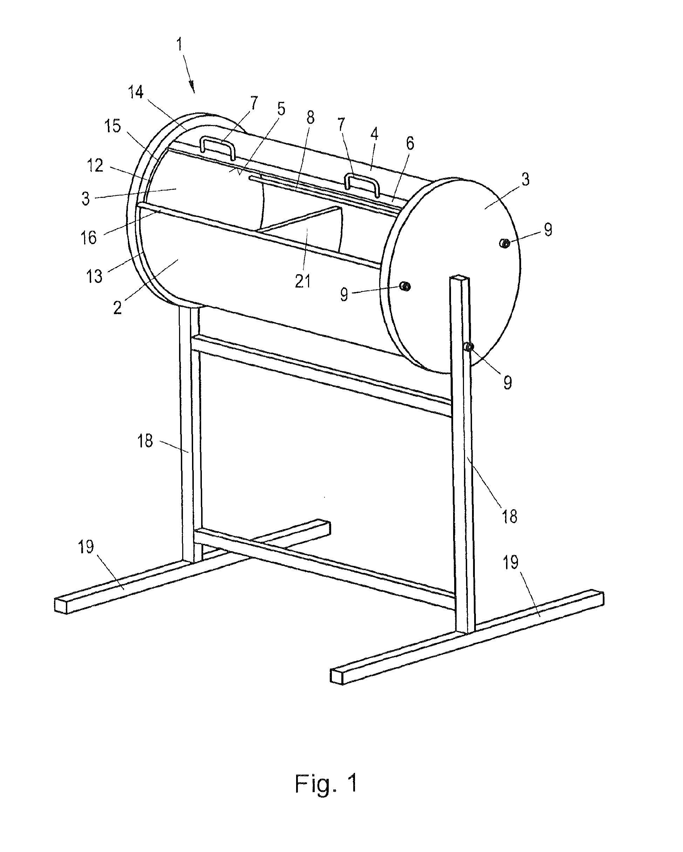

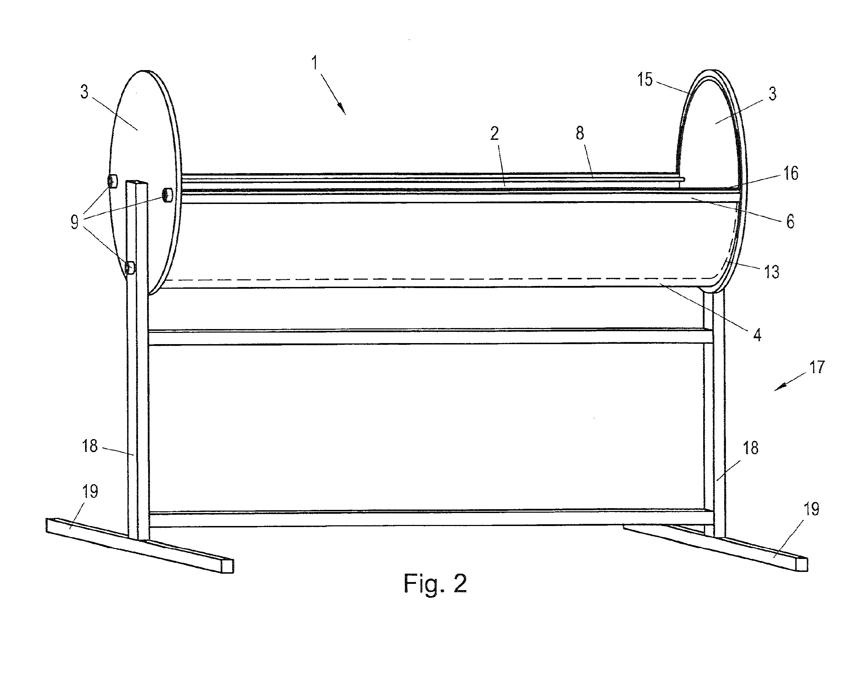

Aus den Zeichnungen, insbesondere Fig. 1 und 2 ist ersichtlich, dass die Seitenwände 3 über die in Gebrauchslage oben liegende Öffnung, die an den Längsseiten des Körpers 2 der Wanne 1 durch deren gebördelte und/oder gekantete Ränder 16 begrenzt wird, überstehen. Zwischen den Seitenwänden 3 ist im gezeigten Ausführungsbeispiel eine verschiebbare Abdeckung 4 vorgesehen. Diese Abdeckung 4 ist im gezeigten Ausführungsbeispiel eine flexible, durchsichtige Platte, die mit ihren seitlichen Rändern 14 in parallel zur Außenform der Seitenwände 3 verlaufenden Nuten 15 aufgenommen ist. Diese Nuten 15 dienen als Führungen für die Abdeckung 4, damit diese aus der Versorgungslage, in der sie seitlich bis unterhalb des Körpers 2 der Wanne 1 angeordnet ist, in ihre Wirklage verschoben werden kann, in welcher Wirklage die Abdeckung 4 die Öffnung an der Oberseite des Körpers 2 der Wanne 1 abdeckt.

Um der Abdeckung 4 die nötige Stabilität zu geben, sind deren freie Ränder durch Randleisten 6 verstärkt. Aus Fig. 1 ist ersichtlich, dass an einem der Ränder der Abdeckung Handgriffe 7 vorgesehen sind, die im Bereich der Randleisten 6 montiert sind und die das Verstellen der Abdeckung 4 in die und aus der geschlossenen Stellung (Wirklage) zu bewegen.

Es ist auch eine Ausführungsform in Betracht gezogen, bei welcher wenigstens der mit Handgriffen 7 ausgestattete freie Rand der Abdeckung 4 durch eine U-Profilschiene (gebördeltes Blech) verstärkt ist. In die Randverstärkung kann auch ein Metallstab eingelegt sein, der mit seinen Enden in die Führungen in Form von Nuten 15 in den Seitenwänden 3 eingreift.

Im gezeigten Ausführungsbeispiel der Fig. 1 und 2 ist die erfindungsgemäße Pflanzwanne 1 an einem Stativ 17 montiert, welches Stativ 17 von Füßen 19 nach oben abstehende Profilstäbe als Steher 18 aufweist, die von außen her an den Seitenwänden 3 der Wanne 1 anliegen. Mit Hilfe von Schrauben oder ähnlichen Befestigungsmitteln sind die Seitenwände 3 und damit die Pflanzwanne 1 an den oberen Enden der Profilleisten 18 des Stativs 17 befestigt.

Im Rahmen der Erfindung kann auch in einer Ausführungsform vorgesehen sein, dass an den Seitenwänden 3 außen oben geschlossene Rohrstücke in Form von Kantrohren befestigt sind, die über die oberen Enden der Steher 18 des Stativs 17 gesteckt werden können. Diese Ausführungsform mit den oben geschlossenen Rohrstücken kann auch beim weiter unten beschriebenen Befestigen einer erfindungsgemäßen Pflanzwanne 1 an einer Balkonbrüstung 20 verwendet werden, indem die Pflanzwanne 1 mit den oben geschlossenen Rohrstücken über die oberen Enden von lotrechten Stehern 18 der Balkonbrüstung 20 gesetzt wird.

Bei dem in Fig. 1 und 2 gezeigten Ausführungsbeispiel ist noch vorgesehen, dass eine der Spannstangen 8, nämlich die Spannstange 8, die unten in der Mitte des Körpers 2 der Wanne 1 vorgesehen ist, die nach oben weisenden als Profilleisten ausgeführten Steher 18 des Stativs 17 durchgreift und die Spannmuttern 9 außerhalb der Steher 18 vorgesehen sind.

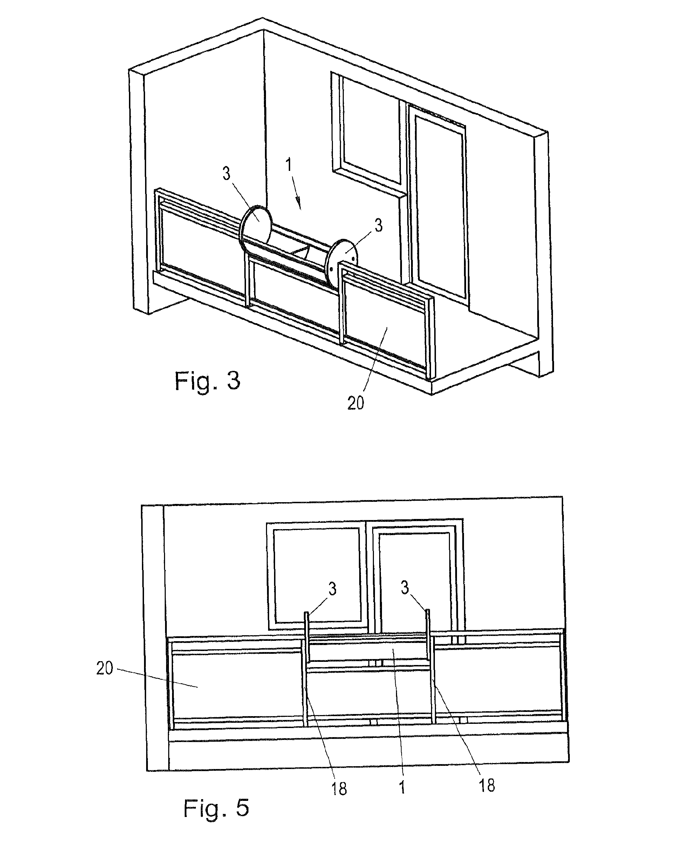

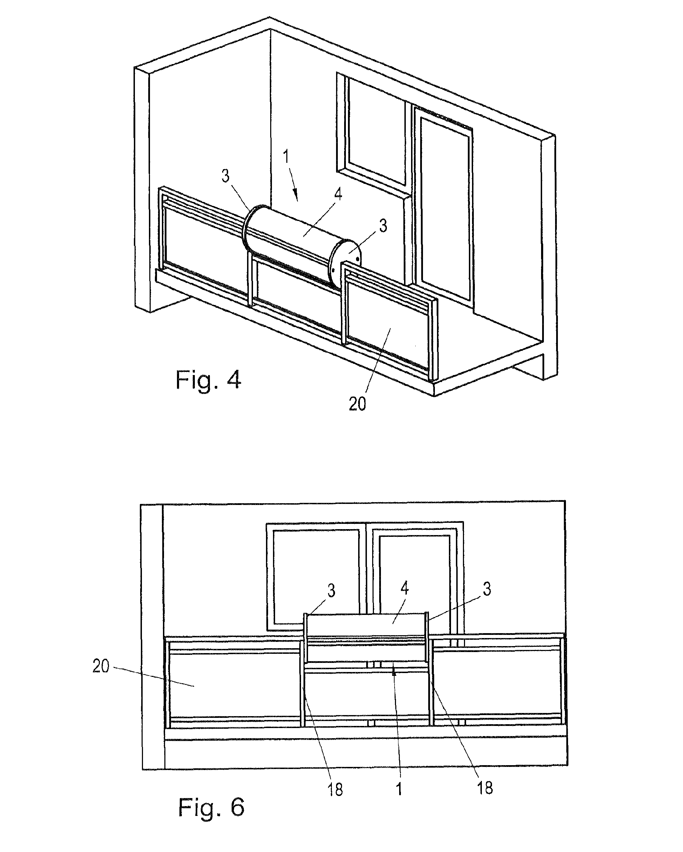

In den Fig. 3 bis 6 ist gezeigt, wie eine erfindungsgemäße Pflanzwanne 1 in eine Balkonbrüstung 20 integriert werden kann, indem die, so wie dies zuvor anhand der Fig. 1 und 2 beschrieben worden ist, zwischen lotrechte Steher 18 der Balkonbrüstung 20 eingesetzt und montiert wird. Dieses hat den Vorteil, dass die Pflanzwanne 1 nicht nur als dekoratives Element dient und das Ziehen von Pflanzen, insbesondere Gewürzkräutern, auf einem Balkon erlaubt, sondern auch dass durch die gegebene Höhe der Pflanzwanne 1 eine zusätzliche Absturzsicherung gebildet wird.

Bei anderen Varianten kann die Pflanzwanne auch an einer Balkonbrüstung eingehängt werden und/oder an waagrechten Elementen der Balkonbrüstung befestigt werden.

Bei anderen Ausführungsbeispielen kann die Pflanzwanne auch mittels Konsolen, Winkeleisen und/oder anderer Befestigungselemente an eine Wand befestigt werden. Insbesondere ist auch eine Befestigung an eine Außenwand eines Gebäudes, beispielsweise unterhalb eines Fensters, möglich.

Insbesondere wenn die erfindungsgemäße Pflanzwanne 1 an einer Balkonbrüstung 20 angebracht wird, kann der Abdeckung 4 ein Abschattungselement aus einem beschränkt oder nicht lichtdurchlässigen Werkstoff zugeordnet werden. Das Abschattungselement wird bei Bedarf in seine die Öffnung der Wanne 1 überdeckende Lage verstellt.

Im gezeigten Ausführungsbeispiel ist noch zu erkennen, dass der Körper 2 der Wanne 1 aus Blech oder Kunststoff besteht, wogegen die Seitenwände 3 aus insbesondere lichtdurchlässigem Kunststoff bestehen. Bei anderen Ausführungsbeispielen können auch die Seitenwände aus Bleck, z.B. Stahl-, Aluminium- oder Edelstahlblech, bestehen.

In einer nicht gezeigten Ausführungsform können an wenigstens einem der Füße 19, vorzugsweise an beiden Füßen 19 nach unten abstehend Rollen, die als Lenkrollen ausgebildet sein können, vorgesehen sein. Wenn an beiden Füßen 19 Rollen angeordnet sind, sind die Rollen von wenigstens einem Paar dieser Rollen, also die Rollen an einem der Füße 19 Lenkrollen, wogegen die Rollen des anderen Paares gegebenenfalls nicht lenkbare Rollen (z.B. Bockrollen) sind.

Um die Einsatzmöglichkeit der erfindungsgemäßen Pflanzwanne 1 zu erweitern, kann dieser eine Heizung zugeordnet sein. Beispielsweise ist diese Heizung wenigstens ein elektrisches Widerstandsheizkabel, das in der Wanne 1 innerhalb des Körpers 2 derselben angeordnet ist. Mit Vorteil liegt das wenigstens eine Heizkabel auf einem rostartigen Zwischenboden, z.B. einem Blech mit Löchern, auf, wobei der Zwischenboden vom tiefsten Bereich des Körpers 2 der Wanne 1 Abstand hat. Bei dieser Ausführungsform kann Pflanzsubstrat (Erde) auch unterhalb des Zwischenbodens vorhanden sein. Der den Zwischenboden bildende Rost kann in den Körper 2 der Wanne 1 einfach eingelegt sein und stützt sich mit seinen Längsrändern auf der Innenseite des Körpers 2 mit Abstand von dessen freien Längsrändern 16, also unterhalb derselben, ab.

Zusammenfassend kann ein Ausführungsbeispiel der Erfindung wie folgt beschrieben werden.

Eine Pflanzwanne 1 für das Ziehen von Gewürzkräutern besitzt eine Wanne, die aus einem Körper 2 aus gebogenem Blech oder Kunststoff und zwei an den gebogenen Rändern 13 anliegenden Seitenwänden 3 gebildet ist. An den Seitenwänden 3 ist eine Abdeckung 4 verschiebbar geführt, welche in ihrer Gebrauchslage die Öffnung an der Oberseite der Wanne 1 überdeckt. Die Pflanzwanne 1 kann an einem Stativ 17 mit lotrechten Stehern 18 oder zwischen Stehern 18 einer Balkonbrüstung 20, montiert werden.

## Patentansprüche

1. Pflanzwanne (1), umfassend einen Körper (2), zwei Seitenwände (3), und eine öffen-und schließbare Abdeckung (4), die in ihrer Wirkstellung eine Öffnung, die an der Oberseite des Körpers (2) der Wanne (1) vorgesehen ist, überdeckt, wobei die Abdeckung (4) mit ihren seitlichen Rändern (14) in Führungen (15) in den Seitenwänden (3) der Wanne (1) geführt ist.

2. Pflanzwanne (1) nach Anspruch 1, **dadurch gekennzeichnet, dass** die Seitenwände (3) der Wanne (1) über die Öffnung der Wanne (1) überstehen.

3. Pflanzwanne (1) nach Anspruch 1 oder 2, **dadurch gekennzeichnet, dass** die Führungen Nuten (15) in Innenseiten der Seitenwände (3) der Wanne (1) sind.

4. Pflanzwanne (1) nach einem der Ansprüche 1 bis 3, **dadurch gekennzeichnet, dass** die Abdeckung (4) von mehreren nach Art einer Jalousie miteinander gekuppelten Leisten gebildet ist.

5. Pflanzwanne (1) nach einem der Ansprüche 1 bis 4, **dadurch gekennzeichnet, dass** die Abdeckung (4) wahlweise ein beschränkt oder nicht lichtdurchlässiges Abschattungselement zugeordnet ist.

6. Pflanzwanne (1) nach einem der Ansprüche 1 bis 5, **dadurch gekennzeichnet, dass** die Führungen (15) außerhalb des Körpers (2) der Wanne (1) verlaufend angeordnet sind.

7. Pflanzwanne (1) nach einem der Ansprüche 1 bis 6, **dadurch gekennzeichnet, dass** die Abdeckung (4) in ihrer Gebrauchslage zwischen den die Öffnung der Wanne (1) begrenzenden Rändern (16) des Körpers (2) der Wanne (1) und die Öffnung überdeckend angeordnet ist.

8. Pflanzwanne (1) nach einem der Ansprüche 1 bis 7, **dadurch gekennzeichnet, dass** die seitlichen Ränder (13) des Körpers (2) der Wanne (1) in Haltenuten (12) in den einander zugewendeten Seiten der Seitenwände (3) eingreifen.

9. Pflanzwanne (1) nach einem der Ansprüche 1 bis 8, **dadurch gekennzeichnet, dass** die Seitenwände (3) durch Spannelemente (8) in Anlage an die seitlichen Ränder (13) des Körpers (2) der Wanne (1) gehalten sind.

10. Pflanzwanne (1) nach einem der Ansprüche 1 bis 9, **dadurch gekennzeichnet, dass** in der Wanne (1), insbesondere im Körper (2) derselben, eine Heizung vorgesehen ist.

11. Pflanzwanne (1) nach Anspruch 10, **dadurch gekennzeichnet, dass** die Heizung wenigstens ein elektrisches Widerstandsheizkabel umfasst.

12. Pflanzwanne (1) nach einem der Ansprüche 1 bis 11, **dadurch gekennzeichnet, dass** die Pflanzwanne (1) in einer Balkonbrüstung (20) angeordnet ist.

13. Verfahren, umfassend:
Installation einer Pflanzwanne (1) nach einem der Ansprüche 1 bis 11 als Teil einer Balkonbrüstung.

14. Verfahren nach Anspruch 13, wobei das Installieren der Pflanzwanne (1) ein Einsetzen und Montieren der Pflanzwanne (1) zwischen lotrechte Steher (18) der Balkonbrüstung (20) umfasst.

15. Verfahren nach Anspruch 14, weiter umfassend
Setzen der Pflanzwanne (1) mit an den Seitenwänden (3) der Pflanzwanne (1) befestigten oben geschlossenen Rohrstöcken in Form von Kantrohren auf die oberen Enden der lotrechten Steher (18).
